(19) Europäisches Patentamt
European Patent Office
Office européen des brevets

(11) EP 1 517 961 B1

(12) FASCICULE DE BREVET EUROPEEN

(45) Date de publication et mention de la délivrance du brevet:
**23.04.2008 Bulletin 2008/17**

(21) Numéro de dépôt: **03760052.5**

(22) Date de dépôt: **17.06.2003**

(51) Int Cl.:
***C08L 83/04*** *(2006.01)* ***C09D 183/04*** *(2006.01)*
***C08K 7/16*** *(2006.01)*

(86) Numéro de dépôt international:
**PCT/FR2003/001833**

(87) Numéro de publication internationale:
**WO 2003/106564 (24.12.2003 Gazette 2003/52)**

(54) **COMPOSITION SILICONE UTILE NOTAMMENT POUR LA REALISATION DE VERNIS ANTI-FRICTION, PROCEDE D APPLICATION DE CE VERNIS SUR UN SUPPORT ET SUPPORT AINSI TRAITE**

SILOXANZUSAMMENSETZUNG FÜR FRIKTIONS-REDUZIERENDE BESCHICHTUNG , VERFAHREN ZUM BESCHICHTEN EINES SUBSTRATS UND BESCHICHTETES SUBSTRAT

SILICONE COMPOSITION USEFUL FOR PRODUCING ANTI-FRICTION VARNISH, METHOD FOR APPLYING SAID VARNISH ON A SUPPORT AND TREATED SUPPORT

(84) Etats contractants désignés:
**AT BE BG CH CY CZ DE DK EE ES FI FR GB GR HU IE IT LI LU MC NL PT RO SE SI SK TR**

(30) Priorité: **18.06.2002 FR 0207489**

(43) Date de publication de la demande:
**30.03.2005 Bulletin 2005/13**

(73) Titulaire: **Bluestar Silicones France**
**69486 Lyon Cedex 03 (FR)**

(72) Inventeurs:
- **DUMONT, Laurent**
  **F-73290 La Motte Servolex (FR)**
- **POUCHELON, Alain**
  **F-69330 Meyzieu (FR)**
- **QUEMIN, Marilyne**
  **F-69003 Lyon (FR)**

(74) Mandataire: **Fleurance, Raphaël et al**
**Cabinet Plasseraud**
**52 rue de la Victoire**
**75440 Paris Cedex 09 (FR)**

(56) Documents cités:
**EP-A- 0 712 956**
**EP-B- 0 643 106**
**EP-B- 0 659 857**
**WO-A-95/19394**
**US-A- 5 506 302**

- **PATENT ABSTRACTS OF JAPAN vol. 015, no. 324 (C-0859), 19 août 1991 (1991-08-19) & JP 03 122185 A (THREE BOND CO LTD), 24 mai 1991 (1991-05-24)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

Le domaine général de l'invention est celui des revêtements ou vernis polymères aptes à conférer à des substrats, des propriétés anti-friction.
Plus précisément, l'invention concerne des compositions silicones utiles notamment pour la réalisation de vernis applicables sur des supports, dont on cherche à diminuer le coefficient de friction. Les supports concernés sont divers et peuvent être notamment constitués :

- ■ par des substrats fibreux, tissés ou non, revêtus d'au moins une couche de protection ou de renfort mécanique, à base de polymère d'enduction, du type élastomère silicone, par exemple ;
- ■ par des substrats polymères ou élastomères, en particulier des films plastiques, comme par exemple : des rubans de transfert thermique utilisables notamment comme support d'encre dans des imprimantes à transfert thermique ; ou des films d'emballage de protection.

La présente invention vise également les procédés d'application du vernis anti-friction qu'elle concerne, sur différents supports.
Enfin, l'invention a pour objet les supports revêtus de tels vernis anti-friction et, en particulier :

- ■ les toiles textiles revêtues d'une couche d'élastomère sur laquelle est appliqué le vernis anti-friction, de telles toiles étant susceptibles d'être utilisées pour la fabrication d'éléments d'architecture textile, de tissus d'ameublement ou de coussins de protection individuelle d'occupants de véhicules, dénommés également "airbags" ;
- ■ les rubans de transfert thermique, par exemple constitués par des films plastiques (e.g. en polyester) porteurs d'encre et utilisables dans des imprimantes à transfert thermique ;
- ■ les films d'emballage de protection ;
- ■ des pièces massives en élastomères silicones.

Ce problème général à la base de l'invention est la mise au point d'un vernis silicone anti-friction. La réduction des coefficients de friction se pose avec une acuité particulière pour des substrats enduits de revêtements silicones élastomères réticulés. En effet, il est bien connu de l'homme de l'art que les couches d'enduction en silicone élastomère ont souvent un toucher collant qui est pénalisant pour de nombreuses applications, en particulier pour les airbags, qui sont des coussins gonflables de protection individuelle d'occupants de véhicules réalisés à partir d'une toile en fibre synthétique, par exemple en polyamide (Nylon®), recouverte sur au moins l'une de ses faces d'une couche d'un élastomère qui peut être un élastomère silicone réticulable ou vulcanisable à froid par polyaddition (EVF-II), polycondensation (EVF-I), d'un élastomère silicone réticulable ou vulcanisable à chaud par polycondensation au peroxyde ou par polyaddition (EVC) ou d'un élastomère silicone visqueux réticulable ou vulcanisable par polyaddition du type LSR.
Cette recherche de faible coefficient de friction pour des revêtements de supports souples par exemple fibreux tissés ou non tissés- enduits ou non d'élastomère silicone, est également un souci dans d'autres applications comme par exemple, les tissus enduits d'élastomères silicones utilisables notamment dans l'architecture textile ou dans les tissus d'ameublement, entre autres.
Les enductions d'élastomères silicones sur des supports textiles présentent de nombreux avantages liés aux caractéristiques intrinsèques des silicones. Les composites réalisés présentent une bonne souplesse alliée à une bonne résistance mécanique ; par ailleurs, à la différence des élastomères traditionnels, les silicones leur confèrent entre autres une tenue thermique accrue et une forte longévité.
Cette préoccupation du glissant superficiel intéresse également les revêtements pour rubans à transfert thermique (e.g. en polyester) ou bien encore les films d'emballage de protection (e.g. en polyéthylène ou en polypropylène. Les rubans de transfert thermique sont utilisables dans des imprimantes à transfert thermique. Ces rubans de transfert thermique sont très fins (quelques microns) et sont revêtus, sur l'une de leurs faces, d'une couche d'encre (cires ou résines) et sur l'autre de leurs faces, d'un revêtement de protection. On utilise en général un revêtement de protection très fin d'épaisseur comprise entre 0,1 et 1 micromètre pour protéger la surface du film et améliorer l'impact de la tête d'impression sans déformer le transfert de l'encre sur le support appliqué.
Dans des imprimantes dont la vitesse d'impression est comprise entre 150 et 300 mm/s, il est très important que la tête d'impression (plate ou en coin), lorsqu'elle frappe le revêtement de protection du ruban, puisse glisser sur la surface du revêtement, à une température élevée comprise entre 100 et 200°C.
S'agissant des films d'emballage de protection, on prévoit parfois de leur appliquer un sur-vernissage à base de silicone, afin de leur conférer des propriétés d'anti-adhérence. Mais il convient que ce sur-vernissage possède un glissant au moins équivalent à celui du film plastique de départ (imprimé ou non).
Dans tous les cas cités ci-dessus à titre illustratif, les composites souffrent d'un manque de glissant, qui peut être associé aux propriétés mécaniques et superficielles (coefficient de friction trop élevé) des silicones.

Dans le cas des applications textiles, cet inconvénient se manifeste dans la pratique par une faible mobilité des tissus enduits sur les tables de confection ce qui en pénalise la productivité. Plus spécifiquement dans le cas des airbags, c'est le déploiement du sac lors du déclenchement de l'airbag qui peut être freiné de façon très préjudiciable.
Divers types de traitements sont envisageables pour pallier cette difficulté. Néanmoins le compromis glissant de surface/propriétés d'usage est tel qu'un vernissage semble être l'un des moyens les plus adaptés, à cette fin.

La demande PCT WO-A-00/59992 décrit des compositions silicones utiles notamment pour la réalisation de vernis applicables sur des supports, dont on cherche à diminuer le coefficient de friction. L'une de ces compositions comprend au moins un polyorganosiloxane **A** (POS) réticulable par l'intermédiaire de groupements fonctionnels de réticulation (GFR) par voie cationique et/ou radicalaire et un amorceur **C** choisi parmi les borates d'onium, caractérisée en ce qu'elle comporte en outre des molécules POS **D** substituées par des groupements fonctionnels secondaires (GFS) portés par des atomes de silicium et sélectionnés parmi ceux comprenant au moins un motif alcoxy et/ou époxy et/ou carboxy, et éventuellement une charge (e.g. silice).

**POS A =** 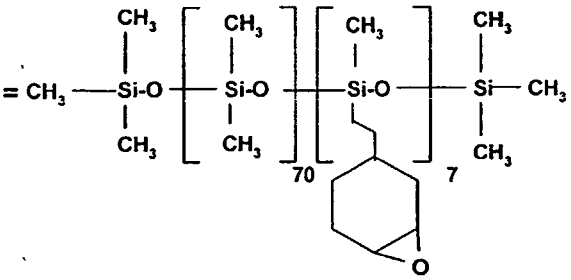

**POS D =** 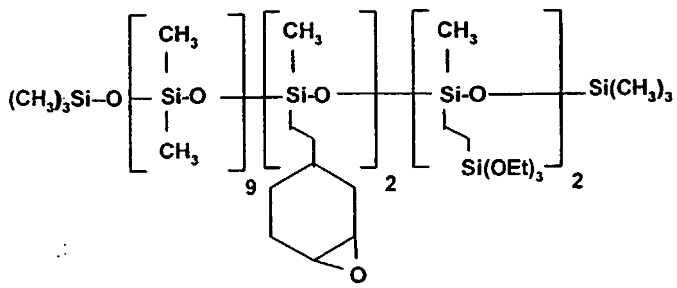

**C =** 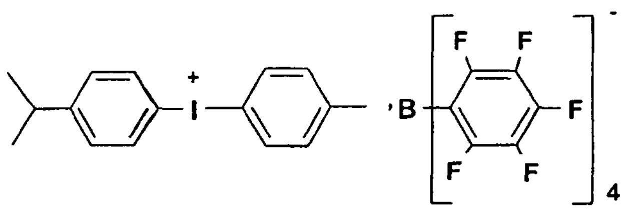

Ces compositions peuvent comporter en outre des charges et en particulier des charges siliciques qui peuvent être par exemple :

des silices de combustion traitées à l'hexaméthyldisilazanes ou à l'octaméthyl-cyclotétrasiloxane (surface spécifique jusqu'à environ 300 $m^2/g$), des silices fumées, des fibres synthétiques ou naturelles (polymères) broyées, des carbonates de calcium, du talc, des argiles, des dioxydes de titane...
De telles compositions sont utilisées comme vernis anti-friction pour revêtements silicone RTV de tissus pour "air bag", pour des rubans à transfert thermique ou pour des films d'emballage.
De tels vernis restent perfectibles en termes de coefficient de glissement. En outre, ils nécessitent la mise en oeuvre de silicones particuliers réticulables par voie cationique sous activation UV, ce qui laisse une marge d'amélioration sur le plan économique et sur le plan de la simplification des moyens mis en oeuvre.

Le brevet WO 01/12895 revendique l'utilisation de charges plaquettaires dans les enductions pour réduire leur coefficient de friction. Le vernis est appliqué à raison d'au plus 15 g/$m^2$. Les charges citées sont éventuelles. Elles sont de deux types : renforçantes (maximum 3% p/p, de préférence sans : silices précipitées ou fumées) et non-renforçantes. Les charges non-renforçantes laminaires peuvent être entre autres : mica, talc, graphite, vermiculite, smectites, pyrophillite, quartz, zéolites, argiles...
Une composition exemplifiée contient schématiquement :

- 34 parties huile PDMS $\alpha$, $\omega$-vinylée de viscosité 20 mPa.s,
- 20 parties huile diMe ViMe siloxane titrant 2,5% Vi,
- 11 parties polyMethylHydrogénosiloxane,
- 35 parties talc,
- catalyseur platine + régulateur.

Les quantités de charges non-renforçantes utilisées sont très importantes, de l'ordre de 35-40% p/p. Une telle charge n'est pas sans perturber les qualités mécaniques et les propriétés d'usage des composites comportant ce vernis silicone selon l'art antérieur. Les meilleurs résultats obtenus en termes de coefficient de friction sont de 0,46 sur du verre avec une charge non-renforçante constituée par de l'alumine trihydraté. Cela ne demande qu'à être amélioré.

Il ressort de cet art antérieur que les vernis silicones connus sont perfectibles et que les charges citées comme pouvant entrer dans leur composition sont très nombreuses et variées. En outre, ces charges sont présentes en quantités importantes, ce qui peut s'avérer très gênant.

Dans ces circonstances, l'un des objectifs essentiels de la présente invention est de fournir un vernis silicone anti-friction pour supports divers, notamment supports textiles revêtus d'élastomères silicones, ce vernis ayant pour qualité d'être économique, d'être parfaitement ancré sur le support et en particulier sur la couche d'élastomère enduit, d'apporter le glissant de surface recherché, et d'avoir une bonne résistance à la salissure ainsi qu'un aspect brillant.
Un autre objectif essentiel de la présente invention est de fournir un vernis antifriction applicable aisément sur divers types de substrats.
Un autre objectif essentiel de l'invention est de fournir un vernis anti-friction réticulable, facile à mettre en oeuvre et économique.
Un autre objectif essentiel de la présente invention est de fournir une composition silicone utile notamment pour la réalisation de vernis anti-friction, cette composition se devant d'être d'un coût de revient raisonnable et simple à préparer.
Un autre objectif essentiel de l'invention est de fournir un vernis anti-friction constitué par une composition silicone réticulable, apte à réduire significativement le coefficient de friction de divers types de substrats enduits ou non.
Un autre objectif de l'invention est de fournir un procédé de vernissage simple et économique de différents supports formés, par exemple, par des substrats fibreux tissés ou non et éventuellement enduits, par exemple, d'une couche d'élastomère silicone réticulé, à l'aide d'un vernis anti-friction à base d'une composition silicone.
Un autre objectif essentiel de l'invention est de fournir un composite comprenant un support éventuellement revêtu d'au moins une couche d'élastomère et recouvert d'un vernis silicone tel que défini ci-dessus, par exemple une toile enduite d'élastomère silicone réticulé, à haut glissant de surface.
Un autre objectif essentiel de l'invention est de proposer un support fibreux, par exemple un tissu, enduit d'un revêtement élastomère réticulé et doté d'un coefficient de friction statique (Ks) correspondant par exemple à l'effort nécessaire pour initier le déplacement d'une masse rectangulaire recouverte du tissu concerné sur un support plan en verre à une valeur $Ks \leq 1$, pour un dépôt $D < 25$ g/$m^2$.

Ces objectifs, parmi d'autres, sont atteints par la présente invention qui concerne, en premier lieu, une composition silicone réticulable utile notamment comme vernis ayant en particulier des propriétés anti-friction, cette composition étant du type de celles comprenant, d'une part, au moins deux espèces organosiliciées réactives (A), (B) entre elles en présence d'un catalyseur (C) pour permettre la réticulation, l'une au moins de ces deux espèces étant constituée par un polyorganosiloxane (POS), et, d'autre part, au moins un composant particulaire (D), caractérisée :

➢ en ce que cette composition est du type de celles réticulables par polyaddition ;
➢ en ce que le composant particulaire (D) est sélectionné dans le groupe des poudres de (co)polyamides - de préférence les (co) polyamides 6, 12 et 6/12- définis comme suit :

→ particules de forme sensiblement arrondie et,
→ diamètre moyen de particules Φmd compris entre 0,1 et 200 μm, de préférence entre 5 et 100 μm et, plus préférentiellement encore entre 10 et 50 μm ;

➢ en ce qu'elle comporte en outre au moins un autre composant particulaire (E) sélectionné dans le groupe des poudres de silice ayant un diamètre moyen de particules Φmd de voisin ou inférieur à 0,1 μm et une surface

spécifique BET supérieure à 50 $m^2/g$, de préférence comprise entre 50 et 400 $m^2/g$, notamment entre 150 et 350 $m^2/g$.

Le vernis silicone selon l'invention est avantageux en ce qu'il permet de réduire très fortement le coefficient de friction et subséquemment de donner un toucher plus glissant, tout en ayant un aspect brillant et une très bonne résistance à la salissure.
Les qualités mécaniques et les propriétés d'usage des supports vernis au moyen de la composition selon l'invention, ne sont pas affectées.
En outre, cette composition de vernis est stable.
Il est du mérite des inventeurs d'avoir sélectionné un composant particulaire spécifique parmi toute la foule des charges particulaires communément citées comme constituants possibles de vernis silicones. En effet, il n'était nullement prévisible que ce composant particulaire judicieusement sélectionné puisse apporter tous les résultats avantageux susvisés.
Conformément à l'invention, la préférence peut être donnée à des poudres de (co)polyamide de masse volumique comprise entre 1 et 1,2 $g/cm^3$.
Suivant une caractéristique préférée de l'invention, le composant particulaire (D) est présent à raison 0,1 à 20 % p/p par rapport à la masse totale de la composition de vernis.
Cette quantité limitée traduit le fait que ce composant ne peut pas être assimilé à une charge influençant les qualités mécaniques et les propriétés d'usage du support vernis.
Le composant particulaire (E) est présent à raison 0,001 à 5 % p/p par rapport à la masse totale de la composition.
La composition de vernis préférée est réticulable par polyaddition et comprend:

(A) 100 parties en poids d'au moins un polyorganosiloxane (POS) présentant, par molécule, au moins deux groupes alcényles, de préférence en $C_2$-$C_6$ liés au silicium ;
(B) 1 à 50 parties en poids d'au moins un polyorganosiloxane présentant, par molécule, au moins trois atomes d'hydrogène liés au silicium ;
(C) 0,001 à 1 partie en poids d'au moins un catalyseur, de préférence composé d'au moins un métal appartenant au groupe du platine ;
(D) 0,1 à 20 parties en poids d'au moins un composant particulaire en (co)polyamide;
(E) 0,001 à 5 parties en poids d'au moins un composant particulaire siliceux ;
(F) 0 à 30 parties en poids d'au moins un promoteur d'adhérence ;
(G) 0 à 1 partie en poids d'au moins un inhibiteur de réticulation ;
(H) 0 à 10 parties en poids d'au moins une résine polyorgano-siloxane ;
(I) éventuellement au moins un additif fonctionnel pour conférer des propriétés spécifiques.

La viscosité du vernis liquide non réticulé tel qu'il est appliqué sur le support est un paramètre important de l'invention. Ainsi, la viscosité dynamique η (mPa.s à 25°C) de la phase silicone du vernis constituée par les POS (A), (B), et éventuellement par les composants(H), voire (I) est telle que :

$$200 \leq \eta \leq 3000,$$

de préférence $300 \leq \eta \leq 2000,$

et plus préférentiellement encore $400 \leq \eta \leq 900.$

La viscosité dynamique à 25°C, de tous les polymères silicones considérés dans le présent exposé, peut être mesurée à l'aide d'un viscosimètre BROOKFIELD, selon la norme AFNOR NFT 76 102 de février 1972.
La viscosité dont il est question dans le présent exposé est la viscosité dynamique à 25°C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.
En entrant dans le détail sur la nature des différents constituants de la composition de vernis silicone selon l'invention, on précisera, s'agissant des POS A et des éventuelles résines (H) que ce sont, de préférence, qu'il(s) présente (nt) des motifs siloxyle de formule :

$$W_a\ Z_b\ SiO_{(4-(a+b))/2} \qquad (\mathbf{1})$$

dans laquelle :

- les symboles W, identiques ou différents, représentent chacun un groupe alcényle, de préférence un alcényle en $C_2$-$C_6$,

- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- a est 1 ou 2, b est 0, 1 ou 2 et a + b est compris entre 1 et 3,
- éventuellement au moins une partie des autres motifs sont des motifs de formule moyenne :

$$Z_c\,SiO_{(4-c)/2} \qquad (\mathbf{2})$$

dans laquelle Z a la même signification que ci-dessus et c a une valeur comprise entre 0 et 3.

Les POS (A) peuvent être très majoritairement formés de motifs de formule (**1**) ou peuvent contenir, en outre, des motifs de formule (**2**). De même, ils peuvent présenter une structure linéaire. Leur degré de polymérisation est, de préférence, compris entre 2 et 5 000.
Z est généralement choisi parmi les radicaux méthyle, éthyle et phényle, 60 % molaire au moins des radicaux Z étant des radicaux méthyle.
Des exemples de motifs siloxyle de formule (**1**) sont le motif vinyldiméthylsiloxane, le motif vinylphénylméthylsiloxane et le motif vinylsiloxane.
Des exemples de motifs siloxyle de formule (**2**) sont les motifs $SiO_{4/2}$, diméthylsiloxane, méthylphénylsiloxane, diphénylsiloxane, méthylsiloxane et phénylsiloxane.
Des exemples de POS (A) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.
La viscosité dynamique $\eta_d$ de ce POS (A) est comprise entre 0,01 et 500 Pa.s, de préférence entre 0,01 et 300 Pa.s.
De préférence, le POS (A) comprend au moins 98 % de motifs siloxyle D: $-R_2SiO_{2/2}$ avec R répondant à la même définition que Z, ce pourcentage correspondant à un nombre de motifs pour 100 atomes de silicium.
De préférence, les motifs alcényles W sont des vinyles portés par des motifs siloxyles D et éventuellement M et/ou T.
En ce qui concerne les POS (B), les préférés sont choisis parmi ceux comprenant des motifs siloxyle de formule :

$$H_d\,L_e\,SiO_{(4-(d+e))/2} \qquad (\mathbf{3})$$

dans laquelle :

- les symboles L, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- d est 1 ou 2, e est 0, 1 ou 2 et d + e a une valeur comprise entre 1 et 3 ;
- éventuellement, au moins une partie des autres motifs étant des motifs de formule moyenne :

$$L_g\,SiO_{(4-g)/2} \qquad (\mathbf{4})$$

dans laquelle L a la même signification que ci-dessus et g a une valeur comprise entre 0 et 3.

A titre d'exemple de POS (B), on peut citer le poly(diméthylsiloxy) (méthylhydrogénosiloxy) $\alpha$, $\omega$ diméthylhydrogénosiloxane.
Les POS (**B**) peuvent être uniquement formés de motifs de formule (**1**) ou comporter en plus des motifs de formule (**2**).
Les POS (B) peuvent présenter une structure linéaire, ramifiée, cyclique ou en réseau. Le degré de polymérisation est supérieur ou égal à 2. Plus généralement, il est inférieur à 100.
La viscosité dynamique $\eta_d$ de ce POS (B) est comprise entre 5 et 1000 mPa.s, de préférence entre 10 et 500 mPa.s.
Le groupe L a la même signification que le groupe Z ci-dessus.
Des exemples de motifs de formule (**1**) sont : $H(CH_3)_2SiO_{1/2}$, $HCH_3SiO_{2/2}$, $H(C_6H_5)SiO_{2/2}$.
Les exemples de motifs de formule (**2**) sont les mêmes que ceux donnés plus haut pour les motifs de formule (**2**).
Des exemples de POS (B) sont :

- les diméthylpolysiloxanes à extrémités hydrogénodiméthylsilyle,
- les copolymères à motifs (diméthyl)-(hydrogénométhyl)polysiloxanes à extrémités triméthylsilyle,
- les copolymères à motifs diméthyl-hydrogénométhylpolysiloxanes à extrémités hydrogénodiméthylsilyle,

- les hydrogénométhylpolysiloxanes à extrémités triméthylsilyle,
- les hydrogénométhylpolysiloxanes cycliques,
- les résines hydrogénosiloxaniques comportant des motifs siloxyles M : $R_3SiO_{1/2}$, Q : $SiO_{4/2}$ et/ou T : $RSiO_{3/2}$, éventuellement D : -$R_2SiO_{2/2}$, avec R = H ou répondant à la même définition que L.

Comme autres exemples de groupes hydrocarbonés Z ou L, monovalents susceptibles d'être présents dans les POS (A) / (B) susvisés, on peut citer: le méthyle, l'éthyle ; le n-propyle ; l'i-propyle ;le n-butyle ; i-butyle ; t-butyle ; chlorométhyle ; dichlorométhyle ; α-chloroéthyle ; α, β-dichloroéthyle ; fluorométhyle ; difluorométhyle ; α, β-difluoroéthyle ; trifluoro-3,3,3-propyle ; trifluoro cyclopropyle ; trifluoro-4,4,4 butyle ; hexafluoro-3,3,5,5,5,5 pentyle ; β-cyanoéthyle, γ-cyanopropyle ; phényle ; p-chlorophényle ; m-chlorophényle ; dichloro-3,5-phényle ; trichlorophényle ; tétrachlorophényle ; o-, p- ou m-tolyle ; α, α, α-trifluorotolyle ; xylyles comme diméthyle-2,3 phényle ; diméthyle-3,4-phényle.
Ces groupements peuvent être éventuellement halogénés, ou bien encore être choisis parmi les radicaux cyanoalkyles. Les halogènes sont par exemple le fluor, le chlore, le brome et l'iode, de préférence le chlore ou le fluor.
Les POS (A) / (B) peuvent être constitués de mélanges de différentes huiles silicone.
Ces POS (A) / (B) peuvent être :

- des RTV tels que définis ci-dessus et dans les brevets US-B- 3,220,972 ; 3,284,406 ; 3,436,366 ; 3,697,473 ; 4,340,709 ;
- des LSR tels que définis ci-dessus ;
- ou des EVC tels que définis ci-dessus.

De préférence, groupements alcényle W des POS (A) et/ou des éventuelles résines POS (H) sont des groupements vinyle Vi, portés par des motifs siloxyle D éventuellement M et/ou T.
Conformément à l'invention, il est parfaitement envisageable de mettre en oeuvre un mélange de différents POS (A) et différents POS (B), tels que définis ci-dessus (linéaires et/ou cycliques).
S'agissant des éventuelles résines POS (H), on préfèrera les sélectionner parmi celles, comportant au moins un reste alcényle dans leur structure et présentant une teneur pondérale en groupe(s) alcényle(s) comprise entre 0,1 et 20 % en poids et, de préférence, entre 0,2 et 10 % en poids.
Ces résines sont des oligoinères ou polymères organopolysiloxanes ramifiés bien connus et disponibles dans le commerce. Elles se présentent sous la forme de solutions, de préférence siloxaniques. Elles présentent, dans leur structure, au moins deux motifs différents choisis parmi ceux de formule $R'_3SiO_{0,5}$ (motif M), $R'_2SiO$ (motif D), $R'SiO_{1,5}$ (motif T) et $SiO_2$ (motif Q), l'un au moins de ces motifs étant un motif T ou Q. Les radicaux R' sont identiques ou différents et sont choisis parmi les radicaux alkyles linéaires ou ramifiés en $C_1$-$C_{6,}$ les radicaux alcényles en $C_2$-$C_4$ phényle, trifluoro-3,3,3 propyle. On peut citer par exemple : comme radicaux R' alkyles, les radicaux méthyle, éthyle, isopropyle, tertiobutyle et n-hexyle, et comme radicaux R' alcényles, les radicaux vinyles.
On doit comprendre que dans les résines POS (H) du type précité, une partie des radicaux R' sont des radicaux alcényles.
Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.
Cette résine de structure est avantageusement présente dans une concentration comprise entre 10 et 70 % en poids par rapport à l'ensemble des constituants de la composition, de préférence entre 30 et 60 % en poids et, plus préférentiellement encore, entre 40 et 60 % en poids.
La réaction de polyaddition propre au mécanisme de réticulation du vernis selon l'invention est bien connue par l'homme du métier. On peut d'ailleurs utiliser un catalyseur dans cette réaction. Ce catalyseur peut notamment être choisi parmi les composés du platine et du rhodium. On peut, en particulier, utiliser les complexes du platine et d'un produit organique décrits dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (C), calculée en poids de platine-métal, est généralement comprise entre 2 et 400 ppm, de préférence entre 5 et 100 ppm basés sur le poids total des POS (A), (B).
Les inhibiteurs de la réaction d'addition (G), sont choisis parmi les composés suivants :

- polyorganosiloxanes, avantageusement cycliques et substitués par au moins un alcényle, le tétraméthylvinyltétrasiloxane étant particulièrement préféré,
- la pyridine,

- les phosphines et les phosphites organiques,
- les amides insaturés,
- les maléates alkylés,
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

R-(R')C(OH)-C≡CH

formule dans laquelle :

- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en $\alpha$ de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.
Un tel ralentisseur (I.1) est présent à raison de 3 000 ppm au maximum, de préférence à raison de 100 à 2000 ppm par rapport au poids total des organopolysiloxanes (A) et (B).
Le promoteur d'adhérence (F) peut par exemple comprendre :

(F.1) au moins un organosilane alcoxylé répondant à la formule générale suivante :

(I.2.1) 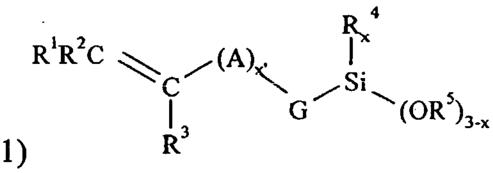

dans laquelle :

- $R^1$, $R^2$, $R^3$ sont des radicaux hydrogénés ou hydrocarbonés identiques ou différents entre eux et représentant l'hydrogène, un alkyle linéaire ramifié en $C_1$-$C_4$ ou un phényle éventuellement substitué par au moins un alkyle en $C_1$-$C_3$ ;
- A est un alkylène linéaire ou ramifié en $C_1$-$C_4$ ;
- G est un lien valenciel ;
- $R^4$ et $R^5$ sont des radicaux identiques ou différents et représentent un alkyle en $C_1$-$C_4$ linéaire ou ramifié ;
- x' = 0 ou 1 ;
- x = 0 à 2;
  ledit composé (F.1) étant de préférence du vinyltriméthoxysilane (VTMS) ou le $\gamma$ méthacryloxypropyletriméthoxysilane ;

(F.2) au moins un composé organosilicié comprenant au moins un radical époxy, ledit composé (F.2) étant de préférence du 3-Glycidoxypropyrtriméthoxysilane (GLYMO) ;

(F.3) au moins un chélate de métal M et/ou un alcoxyde métallique de formule générale M $(OJ)_n$, avec n = valence de M et J = alkyle linéaire ou ramifié en $C_1$ - $C_8$, M étant choisi dans le groupe formé par : Ti, Zr, Ge, Li, Mn, Fe, Al, Mg, ledit composé (F.3) étant de préférence du titanate de tert.butyle.

Les proportions des (F.1), (F.2) et (F.3), exprimée en % en poids par rapport au total des trois, sont de préférence les suivantes :
(F.1) $\geq$ 10,
(F.2) $\geq$ 10,
(F.3) $\leq$ 80.

Par ailleurs, ce promoteur d'adhérence (F) est de préférence présent à raison de 0,1 à 10 %, de préférence 0,5 à 5 % et plus préférentiellement encore 1 à 2,5 % en poids par rapport à l'ensemble des constituants de la préparation.

Le composant particulaire (E) est choisi parmi les silices colloïdales, les poudres de silice de combustion et de précipitation ou leur mélange.

Ces poudres présentent une taille moyenne de particule généralement inférieure à 0,1 µm et une surface spécifique BET supérieure à 50 $m^2$/g, de préférence comprise entre 100 et 300 $m^2$/g.
Ces charges peuvent avantageusement être traitées par un agent de compatibilisation tel que par exemple l'hexaméthyldisilazane.
Sur le plan pondéral on préfère mettre en oeuvre une quantité de ce composant de 0,001 à 5 parties, de préférence entre 1 et 5 parties.

Concernant les additifs fonctionnels (I) susceptibles d'être mis en oeuvre, il peut s'agir de produits couvrants tels que par exemple des pigments/colorants (I.1), des stabilisants (I.2) ou des charges (1.3).

Quand les préparations utilisées dans le procédé selon l'invention comprennent une charge (I.3), elle est de préférence minérale. Elle peut être constituée par des produits choisis parmi les matières siliceuses (ou non).
Les charges siliceuses telles que des terres de diatomées ou du quartz broyé, peuvent ainsi être employées.
Par ailleurs des exemples de charges non siliceuses utilisables seules ou en mélange sont le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,01 et 300 µm et une surface BET inférieure à 100 $m^2$/g.

Dans le procédé selon l'invention, on peut avantageusement utiliser un système bicomposant précurseur des préparations.

La composition de vernis selon l'invention. peut être par exemple appliquée sur un support par tout moyen d'imprégnation approprié (par exemple foulardage), et éventuellement tout moyen d'enduction approprié (par exemple racle ou cylindre).

La réticulation de la composition silicone liquide de vernis appliquée sur le support à revêtir, est généralement activée par exemple en chauffant le support imprégné, voire revêtu, à une température comprise entre 50 et 200°C, en tenant bien évidemment compte de la résistance maximale du support à la chaleur.

Compte tenu de sa facilité d'obtention de son faible coût et de ses propriétés anti-friction, le vernis silicone selon l'invention est susceptible d'avoir des débouchés dans de nombreux domaines d'application et en particulier dans le domaine du revêtement des supports avec une âme fibreuse tissée ou non.

Selon un autre de ses aspects, un procédé de vernissage est caractérisé en ce que l'on applique la composition telle que définie ci-dessus, à titre de vernis anti-friction, sur un support éventuellement revêtu d'au moins une couche d'élastomère silicone.

De préférence, ce procédé consiste essentiellement :

- à enduire le support à l'aide de la composition telle que définie ci-dessus,
- à faire réticuler la couche de vernis, éventuellement en activant thermiquement la réticulation,
- et éventuellement à renouveler au moins une fois les étapes ci-dessus.

Suivant une disposition avantageuse de l'invention, la composition du vernis est appliquée sur le support selon un taux d'enduction inférieur ou égal à 25 g/$m^2$, de préférence compris entre 5 et 20 g/$m^2$.

Les moyens d'application de la couche de vernis non réticulé sur le support sont du type de ceux connus et appropriés à cette fin (par exemple racle, cylindre d'enduction ou pulvérisation). Il en va de même en ce qui concerne les moyens d'activation, par exemple thermique ou rayonnement I.R.
D'autres détails seront donnés à cet égard dans les exemples qui suivent.

La présente invention concerne également le support vernis (ou composite) doté de propriétés anti-frictions et de toucher glissant, susceptible d'être obtenu par le procédé tel que visé supra. Ce composite est caractérisé en ce qu'il comprend :

- un support,
- éventuellement un revêtement solidaire d'au moins l'une des faces du support et constitué d'au moins une couche d'élastomère silicone,
- au moins une couche de vernis à base de la composition telle que définie ci-dessus.

Le revêtement silicone est facultatif car non indispensable lorsque le support est lui-même silicone.
De préférence, le support est un support souple, de préférence choisi dans le groupe comprenant :

- les textiles,
- les supports fibreux non tissés,
- les films polymères, en particulier polyester, polyamide....

Dans une forme de réalisation avantageuse, ce support vernis - de préférence textile - est revêtu sur au moins une de ses faces d'au moins une couche d'élastomère silicone réticulable ou au moins partiellement réticulé de préférence choisi parmi :

- les silicones RTV polyaddition ou polycondensation,
- et/ou les silicones EVC au peroxyde,
- et/ou les silicones LSR polyaddition.

Le vernis anti-friction obtenu à partir de la composition, telle que définie supra, est appliqué sur la (ou les) couche(s) (supérieure(s)) d'élastomère silicone.
Les expressions RTV, LSR, EVC sont bien connues de l'homme du métier : RTV est l'abréviation de "Room Temperature Vulcanising" ; LSR est l'abréviation de "Liquid Silicone Rubber" ; EVC est l'abréviation de : "Elastomère Vulcanisable à Chaud".
En pratique, l'invention vise plus précisément les supports (par exemple textiles tels que ceux utilisés pour la fabrication "d'airbags") revêtus sur l'une et/ou l'autre de leurs faces d'une couche d'élastomère silicone réticulé RTV, EVC ou LSR, elle-même enduite d'un revêtement de vernis silicone anti-friction tel que défini ci-dessus.
Le problème de l'apport de propriétés anti-friction est particulièrement aigu s'agissant de ces enductions élastomères silicones réticulées puisque comme cela a déjà été indiqué ci-dessus, ces dernières ont pour caractéristique d'avoir un toucher collant.
Les polyorganosiloxanes, constituants principaux des couches collantes d'élastomères réticulés sur lesquelles le vernis selon l'invention peut être appliqué, peuvent être linéaires, ramifiés ou réticulés, et comporter des radicaux hydrocarbonés et/ou des groupements réactifs comme par exemple des groupes hydroxyles, des groupements hydrolysables, des groupements alkényles et des atomes d'hydrogène. A noter que les compositions polyorganosiloxanes sont amplement décrites dans la littérature et notamment dans l'ouvrage de Walter NOLL: "Chemistry and Technology of Silicones", Academic Press, 1968, 2ème édition, pages 386 à 409.
Plus précisément, ces polyorganosiloxanes vernissables sont constitués de motifs siloxyles de formule générale :

$$R^{\circ}_{n1}\, SiO_{\frac{4-n_1}{2}} \qquad \textbf{(I')}$$

et/ou de motifs siloxyles de formule :

$$Z^{\circ}_{x_1}\, R^{\circ}_{y_1}\, SiO_{\frac{4-x_1-y_1}{2}} \qquad \textbf{(II')}$$

formules dans lesquelles les divers symboles ont la signification suivante :

- les symboles R°, identiques ou différents, représentent chacun un groupement de nature hydrocarbonée non hydrolysable, ce radical pouvant être :

  - un radical alkyle, halogénoalkyle ayant de 1 à 5 atomes de carbone et comportant de 1 à 6 atomes de chlore et/ou de fluor,
  - des radicaux cycloalkyles et halogénocycloalkyles ayant de 3 à 8 atomes de carbone et contenant de 1 à 4 atomes de chlore et/ou de fluor,
  - des radicaux aryles, alkylaryles et halogénoaryles ayant de 6 à 8 atomes de carbone et contenant de 1 à 4 atomes de chlore et/ou de fluor,
  - des radicaux cyanoalkyles ayant de 3 à 4 atomes de carbone ;

- les symboles Z°, identiques ou différents, représentent chacun un atome d'hydrogène, un groupement alkényle en $C_2$-$C_6$, un groupement hydroxyle, un atome hydrolysable, un groupement hydrolysable ;
- $n_1$ = un nombre entier égal à 0, 1, 2 ou 3 ;
- $x_1$ = un nombre entier égal à 0, 1, 2 ou 3 ;
- $y_1$ = un nombre entier égal à 0, 1, ou 2 ;
- la somme x + y est comprise entre 1 et 3.

A titre illustratif, on peut citer parmi les radicaux organiques R° directement liés aux atomes de silicium : les groupes méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle; trichlorophényle ; tétrachlorophényle ; o-, p- ou m-tolyle ; α,α,α-trifluorotolyle ; xylyle comme diméthyl-2,3 phényle, diméthyl-3,4 phényle.
Préférentiellement, les radicaux organiques R° liés aux atomes de silicium sont des radicaux méthyle, phényle, ces radicaux pouvant être éventuellement halogénés ou bien encore des radicaux cyanoalkyle.
Les symboles Z° peuvent être des atomes d'hydrogène, des atomes hydrolysables tels que des atomes d'halogène, en particulier des atomes de chlore, des groupements vinyles, hydroxyles ou des groupements hydrolysables tels que par exemple : amino, amido, aminoxy, oxime, alkoxy, alkényloxy, acyloxy.
La nature du polyorganosiloxane et donc les rapports entre les motifs siloxyles (I') et (II') et la répartition de ceux-ci est, comme on le sait, choisie en fonction du traitement de réticulation qui sera effectué sur la composition durcissable (ou vulcanisable) en vue de sa transformation en élastomère.
Il est possible d'utiliser une grande variété de compositions monocomposantes ou bicomposantes réticulant par des réactions de polyaddition ou de polycondensation, en présence d'un catalyseur métallique et éventuellement d'une amine et d'un agent de réticulation.
Les compositions polyorganosiloxanes bicomposantes ou mono-composantes réticulant à température ambiante (RTV) ou à la chaleur (EVC) par des réactions de polyaddition, essentiellement par réaction de groupements hydrogéno-silylés sur des groupements alkénylsilylés, en présence généralement d'un catalyseur métallique, de préférence au platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (II') dans lesquels le reste Z° représente un groupement alkényle en $C_2$ - $C_6$ et où $x_1$ est au moins égal à 1, éventuellement associés à des motifs (I'), et d'autre part d'un hydrogénopolysiloxane linéaire, ramifié ou réticulé constitué de motifs (II') dans lesquels le reste Z° représente alors un atome d'hydrogène et où $x_1$ est au moins égal à 1, éventuellement associés à des motifs (I').
Les compositions polyorganosiloxanes bicomposantes ou monocomposantes réticulant à température ambiante (RTV) par des réactions de polycondensation sous l'action de l'humidité, en présence généralement d'un catalyseur métallique, par exemple un composé de l'étain sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les polyorganosiloxanes entrant dans ces compositions sont en général des polysiloxanes linéaires, ramifiés ou réticulés constitués de motifs (II') dans lesquels le reste Z° est un groupement hydroxyle ou un atome ou groupement hydrolysable et où $x_1$ est au moins égal à 1, avec la possibilité d'avoir au moins un reste Z° qui est égal à un groupement hydroxyle ou à un atome ou à un groupement hydrolysable et au moins un reste Z° qui est égal à un groupement alkényle quand $x_1$ est égal à 2 ou 3, lesdits motifs (II') étant éventuellement associés à des motifs (I'). De pareilles compositions peuvent contenir en outre un agent de réticulation qui est notamment un silane portant au moins trois groupements hydrolysables comme par exemple un silicate, un alkyltrialkoxysilane ou un aminoalkyltrialkoxysilane.
Ces compositions polyorganosiloxanes RTV qui réticulent par des réactions de polyaddition ou de polycondensation, présentent avantageusement une viscosité à 25°C au plus égale à 100 000 mPa.s et, de préférence, comprise entre

10 et 50 000 mPa.s.
Il est possible de mettre en oeuvre des compositions RTV réticulant à température ambiante par des réactions de polyaddition ou de polycondensation, ayant une viscosité à 25°C supérieure à 100 000 mPa.s, comme celle se situant dans l'intervalle allant d'une valeur supérieure à 100 000 mPa.s à 300 000 mPa.s ; cette modalité est recommandée lorsque l'on souhaite préparer des compositions durcissables chargées dans lesquelles la (ou les) charge(s) utilisée(s) a (ont) tendance à se séparer par sédimentation.
Il est également possible de mettre en oeuvre, des compositions réticulant à la chaleur par des réactions de polyaddition et plus précisément de compositions dites de type EVC de polyaddition, ayant une viscosité à 25°C au moins égale à 500 000 mPa.s et, de préférence comprise entre 1 million de mPa.s et 10 millions de mPa.s et même davantage.
Il peut aussi s'agir de compositions durcissables à température élevée sous l'action de peroxydes organiques tels que le peroxyde de dichloro-2,4 benzoyle, le peroxyde de benzoyle, le perbenzoate de t-butyle, le peroxyde de cumyle, le peroxyde de di-t-butyle. Le polyorganosiloxane ou gomme entrant dans de telles compositions (dénommées simplement de type EVC) est alors constitué essentiellement de motifs siloxyles (I'), éventuellement associés à des motifs (II') dans lesquels le reste Z° représente un groupement alkényle en $C_2$ - $C_6$ et où x est égal à 1. De tels EVC sont par exemple décrits dans les brevets US-A-3 142 655, 3 821 140, 3 836 489 et 3 839 266). Ces compositions présentent avantageusement une viscosité à 25°C au moins égale à 1 million de mPa.s et, de préférence, comprise entre 2 millions et 10 millions de mPa.s et même davantage.
D'autres compositions polyorganosiloxanes vernissables par la composition de vernis silicone selon l'invention sont celles, monocomposantes ou bicomposantes, réticulant à la chaleur par des réactions de polyaddition, appelées compositions LSR. Ces compositions répondent aux définitions données ci-avant à propos des compositions préférées appelées RTV, sauf en ce qui concerne leur viscosité qui se situe cette fois dans l'intervalle allant d'une valeur supérieure à 100 000 mPa.s à 500 000 mPa.s.
Sans que cela ne soit limitatif, les revêtements silicones élastomères sur lesquels le vernis selon l'invention peut être appliqué pour diminuer leur coefficient de friction, sont plus spécialement des revêtements obtenus à partir de compositions élastomères silicones vulcanisables à froid RTV, en particulier de type bicomposant (RTV 2), par polyaddition.
Outre les supports textiles revêtus de silicone, le vernis anti-friction selon l'invention peut être appliqué :

- ➢ sur des films plastiques (e.g. en polyester) que sont les rubans de transfert thermique pour les imprimantes de même nom,
- ➢ ou sur des films plastiques d'emballage de protection (e.g. en polyéthylène ou en polypropylène).

Dans toutes les applications, le vernis antifriction selon l'invention va promouvoir le glissement d'au moins l'une des faces du film plastique, cette face pouvant être revêtue d'au moins une couche silicone.
La présente invention vise enfin tout article manufacturé comportant du composite tel que défini supra.
Les exemples présentés démontrent la performance du vernis selon l'invention et ses avantages par rapport à l'art antérieur.

**<u>EXEMPLES</u> :**

**<u>I / Préparation des composites</u>**

Un tissu polyester de 200g/$m^2$ est préalablement enduit d'une couche d'élastomère silicone obtenu comme décrit ci-dessous.
Dans un mélangeur à bras de 100 1 on introduit 40 kg d'une huile de silicone α, ω divinylée de viscosité 1,5 Pa.s qui titre 0,1 meq de vinyle (Vi) par gramme d'huile, 0,24 kg d'eau potable et 0,24 kg d'hexaméthyldisilazane. Après homogénéisation on rajoute par portions en à peu près 2 heures 13,9 kg d'une silice de combustion caractérisée par sa surface spécifique de 200 m /g. Après environ 1 heure de mélangeage, on rajoute en à peu près 1 heure 2,27 kg d'hexaméthyldisilazane. 2 heures plus tard on commence une phase de chauffage au cours de laquelle le mélange est placé sous courant d'azote (30 $m^3$/h); le chauffage continue jusqu'à atteindre environ 140°C, température palier qui est maintenue pendant 2 heures afin d'évacuer les matières volatiles de la composition. La suspension est alors laissée à refroidir.
Partant de cette suspension on formule une partie A et une partie B dans des réacteurs appropriés.
La partie A contient :

- 320 g de la suspension
- 111 g d'une huile α,ω divinylée de viscosité 100 Pa.s qui titre 0,03 meq Vi par gramme d'huile
- 35 g de quartz broyé de granulométrie moyenne (d50) proche de 2,5 μm
- 12 g d'une huile polyhydrogéno de viscosité 0,3 Pa.s qui titre 1,6 meq SiH par gramme d'huile

- 12 g d'une huile $\alpha,\omega$ dihydrogéno qui titre 1,9 meq SiH par gramme d'huile
- 5 g de triméthoxysilane de $\gamma$ méthacryloxypropyle
- 5 g de triméthoxysilane de $\gamma$ glycidoxypropyle
- 0,7 g d'éthynylcyclohexanol.

La partie B contient :

- 480 g de la suspension
- 20 g d'orthotitanate de butyle
- 1,1 g d'un catalyseur dosé à 10% de platine.

Les parties A et B sont mélangées dans le rapport de 100 à 10 et, après débullage, servent à l'enduction du support textile susvisé. Cette enduction est ensuite thermiquement réticulée.

Un vernis est alors déposé au moyen d'une barre de Meyer ; dans ces conditions, la quantité déposée est de l'ordre de 15-20 g/$m^2$. L'ensemble est ensuite porté dans une étuve pour provoquer le séchage et la réticulation du vernis.

**<u>II / Mesure du coefficient de glissement</u>**

Le composite est placé sur une plaque de verre ; on le charge par une masse parallélépipédique de surface 40 $cm^2$ pesant m=200 g. On mesure alors la force F nécessaire au déplacement de cet équipage ; la mesure est pratiquée à une vitesse de déplacement de 150 mm/mn.
Le coefficient de frottement adimensionnel s'exprime par le rapport de cette force au poids appliqué.

$$K = F/mg$$

Cette mesure est complétée par la sensation ressentie au toucher du composite.

**<u>III / Aspect visuel</u>**

On note si le vernis confère un aspect brillant ou mat.

**<u>IV / Résistance à la salissure</u>**

On dépose du noir de fumée sur le revêtement vernis et on note dans une échelle de 0 à 5 l'aptitude de ce support à être plus ou moins facilement nettoyé :

0 = reste noir ; 5 = quelques traces noires subsistent

**<u>EXEMPLE COMP 1 : Vernis 1</u>**

Dans un réacteur à température ambiante, on mélange progressivement, dans les proportions indiquées ci-après (parties en poids) :

- 38,5 parties de PolyDiMéthylSiloxane (PDMS) $\alpha,\omega$-diMeVi de viscosité 20 mPa.s
- 22,5 parties de PDMS contenant env. 2,5 % de Vi sous forme de groupes $D^{Vi}$
- 39 parties de talc
- 13 parties de polyméthylhydrogénosiloxane de viscosité 20 mPa.s
- 0,052 parties d'éthynylcyclohexanol
- 0,05 parties de catalyseur platine
- 100 parties de toluène.

**<u>EXEMPLE COMP 2: Vernis 2</u>**

Dans un réacteur à température ambiante, on mélange progressivement, dans les proportions indiquées ci-après (parties en poids) :

- 85 parties de PDMS contenant env. 2,5 % de Vi sous forme de groupes $D^{Vi}$
- 15 parties de PDMS $\alpha,\omega$-diMeVi de viscosité 600 mPa.s

- 20 parties de PDMS α,ω diMeVi de viscosité 100 Pa.s
- 0,052 parties d'ethynylcyclohexanol
- 10 parties de γ méthacryloxypropyltriméthoxysilane
- 15 parties de polyméthylhydrogenosiloxane de viscosité 20 mPa.s
- 0,1 parties de catalyseur platine.

**EXEMPLE 3 : Vernis 3**

A la formulation du vernis 2 ; on rajoute :

- 5 parties d'Orgasol® 2002 ES3 (poudre de PA 12 de diamètre moyen 30 μm)

**EXEMPLE 4 : Vernis 4**

A la formulation du vernis 3 ; on rajoute :

- 1,5 parties de silice R812 de DEGUSSA (silice Aerosil® hydrophobée de 260 $m^2/g$)

**Résultats**

**TABLEAU 1**

| | Aspect | K | Toucher | Salissure |
|---|---|---|---|---|
| Non verni | | > 10 | | 0 |
| Exemple COMP 1 Vernis1 | mat | 0,5 | doux | 1 |
| Exemple COMP 2 Vernis 2 | brillant | > 8 | happant | 3 |
| Exemple 3 Vernis 3 | satiné | 0,45 | glissant | 5 |
| Exemple 4 Vernis 4 | satiné | 0,35 | glissant, doux | 5 |

**Commentaires**

Les résultats présentés montrent :

- un coefficient de frottement très fortement réduit par le vernissage
- un coefficient de frottement encore amélioré par la présence de charges
- un toucher plus glissant en corrélation avec le coefficient de frottement
- la conservation d'un aspect brillant dans le cas d'utilisation d'Orgasol®
- une bien meilleure résistance à la salissure dans le cas des vernis 2 à 4.

Outre son impact sur le glissant de surface voire la réflectivité, la présence de silice offre une stabilisation supplémentaire des suspensions vis-à-vis des phénomènes de décantation ; elle permet aussi une certaine régulation de la viscosité de la formulation du vernis.

## Revendications

1. Composition silicone réticulable utile notamment comme vernis ayant en particulier des propriétés anti-friction, cette composition étant du type de celles comprenant, d'une part, au moins deux espèces organosiliciées réactives (A), (B) entre elles en présence d'un catalyseur (C) pour permettre la réticulation, l'une au moins de ces deux espèces étant constituée par un polyorganosiloxane (POS), et, d'autre part, au moins un composant particulaire (D), **caractérisée :**

   ➢ en ce que cette composition est du type de celles réticulables par polyaddition;

➢ en ce que le composant particulaire (D) est sélectionné dans le groupe des poudres de (co)polyamides - de préférence les (co) polyamides 6, 12 et 6/12- définis comme suit :

→ particules de forme sensiblement arrondie et,
→ diamètre moyen de particules Φmd compris entre 0,1 et 200 μm, de préférence entre 5 et 100 μm et, plus préférentiellement encore entre 10 et 50 μm ;

➢ en ce qu'elle comporte en outre au moins un autre composant particulaire (E) sélectionné dans le groupe des poudres de silice ayant un diamètre moyen de particules Φmd de voisin ou inférieur à 0,1 μm et une surface spécifique BET supérieure à 50 $m^2$/g, de préférence comprise entre 50 et 400 $m^2$/g, notamment entre 150 et 350 $m^2$/g.

2. Composition selon la revendication 1, **caractérisée en ce que** le composant particulaire (D) est présent à raison 0,1 à 20 % p/p par rapport à la masse totale de la composition.

3. Composition selon la revendication 1 ou 2, **caractérisée en ce que** le composant particulaire (E) est présent à raison 0,001 à 5 % p/p par rapport à la masse totale de la composition.

4. Composition selon l'une quelconque des revendications 1 à 3, **caractérisée en ce qu'**elle comprend :

(A) 100 parties en poids d'au moins un polyorganosiloxane (POS) présentant, par molécule, au moins deux groupes alcényles, de préférence en $C_2$-$C_6$ liés au silicium ;
(B) 1 à 50 parties en poids d'au moins un polyorganosiloxane présentant, par molécule, au moins trois atomes d'hydrogène liés au silicium ;
(C) 0,001 à 1 partie en poids d'au moins un catalyseur, de préférence composé d'au moins un métal appartenant au groupe du platine ;
(D) 0,1 à 20 parties en poids d'au moins un composant particulaire en (co)polyamide;
(E) 0,001 à 5 parties en poids d'au moins un composant particulaire siliceux;
(F) 0 à 30 parties en poids d'au moins un promoteur d'adhérence ;
(G) 0 à 1 partie en poids d'au moins un inhibiteur de réticulation ;
(H) 0 à 10 parties en poids d'au moins une résine polyorgano-siloxane ;
(I) éventuellement au moins un additif fonctionnel pour conférer des propriétés spécifiques.

5. Composition selon l'une quelconque des revendications 1 à 4, **caractérisée en ce que** la viscosité dynamique η (mPa.s à 25°C) de sa phase silicone constituée par les POS (A), (B), et éventuellement par les composants(H), voire (I) est telle que :

| | |
|---|---|
| | $200 \leq \eta \leq 3000$, |
| de préférence | $300 \leq \eta \leq 2000$, |
| et plus préférentiellement encore | $400 \leq \eta \leq 900$. |

6. Composition selon l'une quelconque des revendications 1 à 5, **caractérisée en ce que** le ou les POS (A) et les éventuelles résines (H) présente(nt) des motifs siloxyle de formule :

$$W_a \, Z_b \, SiO_{(4-(a+b))/2} \qquad (\mathbf{1})$$

dans laquelle :

- les symboles W, identiques ou différents, représentent chacun un groupe alcényle, de préférence un alcényle en $C_2$-$C_6$,
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- a est 1 ou 2, b est 0, 1 ou 2 et a + b est compris entre 1 et 3,
- éventuellement au moins une partie des autres motifs sont des motifs de formule moyenne :

$$Z_c\ SiO_{(4-c)/2} \qquad (\mathbf{2})$$

dans laquelle Z a la même signification que ci-dessus et c a une valeur comprise entre 0 et 3.

**7.** Composition selon l'une quelconque des revendications 1 à 6, **caractérisée en ce que le** ou les POS (B) présente (nt) des motifs siloxyle de formule :

$$H_d\ L_e\ SiO_{(4-(d+e))/2} \qquad (\mathbf{3})$$

dans laquelle :

- les symboles L, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- d est 1 ou 2, e est 0, 1 ou 2 et d + e a une valeur comprise entre 1 et 3,
- éventuellement, au moins une partie des autres motifs étant des motifs **de** formule moyenne :

$$L_g\ SiO_{(4-g)/2} \qquad (\mathbf{4})$$

dans laquelle L a la même signification que ci-dessus et g a une valeur comprise entre 0 et 3.

**8.** Composition selon l'une quelconque des revendications 1 à 7, **caractérisée en ce que** les groupements alcényle W des POS (A) et des éventuelles résines POS (H) sont des groupements vinyle Vi, portés par des motifs siloxyle D éventuellement M et/ou T.

**9.** Procédé de vernissage **caractérisé en ce que** l'on applique la composition selon l'une quelconque des revendications 1 à 8, à titre de vernis anti-friction, sur un support éventuellement revêtu d'au moins une couche d'élastomère silicone.

**10.** Procédé selon la revendication 9, **caractérisé en ce qu'**il consiste essentiellement :

- à enduire le support à l'aide de la composition selon l'une quelconque des revendications 1 à 8,
- à faire réticuler la couche de vernis, éventuellement en activant thermiquement la réticulation,
- et éventuellement à renouveler au moins une fois les étapes ci-dessus.

**11.** Procédé selon la revendication 9 ou 10, **caractérisé en ce que** la composition de vernis est appliquée sur le support selon un taux d'enduction inférieur ou égal à 25 $g/m^2$, de préférence compris entre 5 et 20 $g/m^2$.

**12.** Composite susceptible d'être obtenu par le procédé selon l'une quelconque des revendications 9 à 11, **caractérisé en ce qu'**il comprend :

- un support,
- éventuellement un revêtement solidaire d'au moins l'une des faces du support et constitué d'au moins une couche d'élastomère silicone,
- au moins une couche de vernis à base de la composition selon l'une quelconque des revendications 1 à 8.

**13.** Composite selon la revendication 12, **caractérisé en ce que** le support est un support souple, de préférence choisi dans le groupe comprenant :

- les textiles,
- les supports fibreux non tissés,
- les films polymères, en particulier polyester, polyamide.

**14.** Arlicle manufacturé **caractérisé en ce qu'**il comporte du composite selon la revendication 12 ou 13.

## Claims

1. Crosslinkable silicone composition useful especially as a varnish which in particular has anti-friction properties, said composition being of the type comprising on the one hand at least two organosilicon species A and B which react with one another in the presence of a catalyst C to allow crosslinking, at least one of these two species consisting of a polyorganosiloxane (POS), and on the other hand at least one particulate component D, **characterized in that**:

   ➢ this composition is of the type crosslinkable by polyaddition;
   ➢ the particulate component D is selected from the group comprising powdered (co)polyamides - preferably (co)polyamides 6, 12 and 6/12 - defined as follows:

      → the particles are of substantially rounded shape, and
      → the mean particle diameter $\Phi_{md}$ is between 0.1 and 200 μm, preferably between 5 and 100 μm and particularly preferably between 10 and 50 μm;

   ➢ it also contains at least one other particulate component E selected from the group comprising powdered silicas having a mean particle diameter $\Phi_{md}$ of about 0.1 μm or less, and a BET specific surface area greater than 50 $m^2/g$, preferably of between 50 and 400 $m^2/g$ and especially of between 150 and 350 $m^2/g$.

2. Composition according to claim 1, **characterized in that** the particulate component D is present in an amount of 0.1 to 20% w/w, based on the total weight of the composition.

3. Composition according to claim 1 or 2, **characterized in that** the particulate component E is present in an amount of 0.001 to 5% w/w, based on the total weight of the composition.

4. Composition according to any one of claims 1 to 3, **characterized in that** it comprises:

   (A) 100 parts by weight of at least one polyorganosiloxane (POS) having at least two alkenyl groups, preferably $C_2$-$C_6$ alkenyl groups, bonded to the silicon in each molecule;
   (B) 1 to 50 parts by weight of at least one polyorganosiloxane having at least three hydrogen atoms bonded to the silicon in each molecule;
   (C) 0.001 to 1 part by weight of at least one catalyst preferably composed of at least one metal belonging to the platinum group;
   (D) 0.1 to 20 parts by weight of at least one particulate component consisting of (co)polyamide;
   (E) 0.001 to 5 parts by weight of at least one siliceous particulate component;
   (F) 0 to 30 parts by weight of at least one adhesion promoter;
   (G) 0 to 1 part by weight of at least one crosslinking inhibitor;
   (H) 0 to 10 parts by weight of at least one polyorganosiloxane resin;
   (I) optionally at least one functional additive for imparting specific properties.

5. Composition according to any one of claims 1 to 4, **characterized in that** the dynamic viscosity η (mPa.s at 25°C) of its silicone phase, consisting of the POS A and B and optionally the components H or I, is such that:

$$200 \leq \eta \leq 3000,$$

preferably $300 \leq \eta \leq 2000,$

and particularly preferably $400 \leq \eta \leq 900.$

6. Composition according to any one of claims 1 to 5, **characterized in that** the one or more POS A and the optional resins H have siloxy units of the formula

$$W_aZ_bSiO_{(4-(a+b))/2} \qquad (1)$$

   in which:

   - the symbols W, which are identical or different, are each an alkenyl group and preferably a $C_2$-$C_6$ alkenyl;
   - the symbols Z, which are identical or different, are each a non-hydrolyzable monovalent hydrocarbon group

that is devoid of an unfavorable action on the activity of the catalyst, is optionally halogenated and is preferably selected from alkyl groups having from 1 to 8 carbon atoms inclusive, and from aryl groups;
- a is 1 or 2, b is 0, 1 or 2 and a + b is between 1 and 3;
- optionally at least some of the other units are units of the empirical formula

$$Z_cSiO_{(4-c)/2} \qquad (2)$$

in which Z is as defined above and c has a value of between 0 and 3.

7. Composition according to any one of claims 1 to 6, **characterized in that** the one or more POS B have siloxy units of the formula

$$H_dL_eSiO_{(4-(d+e))/2} \qquad (3)$$

in which:

- the symbols L, which are identical or different, are each a non-hydrolyzable monovalent hydrocarbon group that is devoid of an unfavorable action on the activity of the catalyst, is optionally halogenated and is preferably selected from alkyl groups having from 1 to 8 carbon atoms inclusive, and from aryl groups;
- d is 1 or 2, e is 0, 1 or 2 and d + e has a value of between 1 and 3;
- optionally at least some of the other units being units of the empirical formula

$$L_gSiO_{(4-g)/2} \qquad (4)$$

in which L is as defined above and g has a value of between 0 and 3.

8. Composition according to any one of claims 1 to 7, **characterized in that** the alkenyl groups W of the POS A and the optional POS resins H are vinyl groups Vi carried by siloxy units D and optionally M and/or T.

9. Varnishing process, **characterized in that** the composition according to any one of claims 1 to 8 is applied, as an anti-friction varnish, to a substrate optionally coated with at least one layer of silicone elastomer.

10. Process according to claim 9, **characterized in that** it consists essentially in:

- coating the substrate with the composition according to any one of claims 1 to 8,
- crosslinking the layer of varnish, optionally with thermal activation,
- and optionally repeating the above steps at least once.

11. Process according to claim 9 or 10, **characterized in that** the varnish composition is applied to the substrate at a coating rate less than or equal to 25 $g/m^2$ and preferably of between 5 and 20 $g/m^2$.

12. Composite obtainable by the process according to any one of claims 9 to 11, **characterized in that** it comprises:

- a substrate,
- optionally a coating firmly fixed to at least one side of the substrate and consisting of at least one layer of silicone elastomer,
- at least one layer of varnish based on the composition according to any one of claims 1 to 8.

13. Composite according to claim 12, **characterized in that** the substrate is a flexible substrate preferably selected from the group comprising:

- textiles,
- non-woven fibrous substrates,
- polymer films, particularly polyester and polyamide.

14. Manufactured article, **characterized in that** it contains composite according to claim 12 or 13.

## Patentansprüche

1. Vernetzbare Silikonzusammensetzung, die insbesondere als Lack verwendbar ist, der insbesondere Antifriktionseigenschaften aufweist, wobei diese Zusammensetzung zu jenen Zusammensetzungen gehört, die einerseits mindestens zwei Arten von Organosiliziumverbindungen (A), (B), die bei Vorhandensein eines Katalysators (C) miteinander reaktiv sind, beinhaltet, um die Vernetzung zu ermöglichen, wobei mindestens eine dieser beiden Arten von einem Polyorganosiloxan (POS) gebildet wird, und die andererseits mindestens einen Sonderbestandteil (D) beinhaltet,
**dadurch gekennzeichnet,**
**dass** diese Zusammensetzung zu den Zusammensetzungen gehört, die durch Polyaddition vernetzbar sind,
**dass** der Sonderbestandteil (D) aus der Gruppe der Pulver der (Co-)Polyamide - vorzugsweise der (Co-)Polyamide 6, 12 und 6/12 - ausgewählt ist, die wie folgt definiert werden:

   - Partikel von im Wesentlichen abgerundeter Form, und
   - durchschnittlicher Partikeldurchmesser Φmd zwischen 0,1 und 200 μm,
   vorzugsweise zwischen 5 und 100 μm und noch besser zwischen 10 und 50 μm, **dass** sie ferner mindestens einen weiteren Sonderbestandteil (E) beinhaltet, der aus der Gruppe der Siliziumoxid-Pulver ausgewählt ist, mit einem durchschnittlichen Partikeldurchmesser Φmd von annähernd oder kleiner als 0, 1 μm und einer spezifischen Oberfläche BET von mehr als 50 $m^2$/g, vorzugsweise zwischen 50 und 400 $m^2$/g und insbesondere zwischen 150 und 350 $m^2$/g.

2. Zusammensetzung nach Anspruch 1,
**dadurch gekennzeichnet,**
**dass** der Sonderbestandteil (D) in einem Verhältnis von 0,1 bis 20 % Gewichtsanteile zur Gesamtmasse der Zusammensetzung enthalten ist.

3. Zusammensetzung nach Anspruch 1 oder 2,
**dadurch gekennzeichnet,**
**dass** der Sonderbestandteil (E) in einem Verhältnis von 0,001 bis 5 % Gewichtsanteile zur Gesamtmasse der Zusammensetzung enthalten ist.

4. Zusammensetzung nach einem der Ansprüche 1 bis 3,
**dadurch gekennzeichnet,**
**dass** sie enthält:

   (A) 100 Gewichtsanteile mindestens eines Polyorganosiloxans (POS), das pro Molekül mindestens zwei Alkenyl-Gruppen aufweist, vorzugsweise als $C_2$-$C_6$, die mit Silizium verbunden sind,
   (B) 1 bis 5 Gewichtsanteile mindestens eines Polyorganosiloxans (POS), das pro Molekül mindestens drei Wasserstoff-Atome aufweist, die mit Silizium verbunden sind,
   (C) 0,001 bis 1 Gewichtsanteil mindestens eines Katalysators, der vorzugsweise mindestens ein Metall enthält, das zur Gruppe der Platine gehört,
   (D) 0,1 bis 20 Gewichtsanteile mindestens eines Sonderbestandteils (D) aus einem (Co-)Polyamide,
   (E) 0,001 bis 5 Gewichtsanteile mindestens eines siliziumhaltigen Sonderbestandteils,
   (F) 0 bis 30 Gewichtsanteile mindestens eines Haftungsverstärkers,
   (G) 0 bis 1 Gewichtsanteil mindestens eines Vernetzungshemmers,
   (H) 0 bis 10 Gewichtsanteile mindestens eines Polyorganosiloxan-Harzes,
   (I) evtl. mindestens einen funktionalen Zusatz, um spezifische Eigenschaften zu verleihen.

5. Zusammensetzung nach einem der Ansprüche 1 bis 4,
**dadurch gekennzeichnet,**
**dass** die dynamische Viskosität η (mPa.s bei 25 °C) ihrer von dem POS (A), (B) und eventuell von den Bestandteilen (H) und sogar (I) gebildeten Silikonphase derart ist, dass

$$200 \leq \eta \leq 3000,$$
vorzugsweise $300 \leq \eta \leq 000,$
und noch besser $400 \leq \eta \leq 900.$

**6.** Zusammensetzung nach einem der Ansprüche 1 bis 5,
**dadurch gekennzeichnet,**
**dass** das oder die POS (A) und die eventuell enthaltenen Harze (H) Siloxyl-Einheiten mit folgender Formel aufweist (aufweisen):

$$W_a Z_b SiO_{(4-(a+b))/2} \qquad (1)$$

wobei :

- die Symbole W, ob identisch oder unterschiedlich, jeweils eine Alkenyl-Gruppe darstellen, vorzugsweise ein Alkenyl als $C_2$-$C_6$,
- die Symbole Z, ob identisch oder unterschiedlich, jeweils eine einwertige, nicht hydrolysierungsfähige kohlenwasserstoffhaltige Gruppe darstellen, außer bei ungünstiger Auswirkung auf die Aktivität des Katalysators, die ferner eventuell halogenhaltig ist und vorzugsweise aus den Alkylgruppen, die 1 bis 8 Kohlenstoffatome beinhalten, sowie aus den Arylgruppen ausgewählt sind,
- a gleich 1 oder 2 ist, b gleich 0, 1 oder 2 ist und a+b zwischen 1 und 3 liegen,
- evtl. mindestens ein Anteil der anderen Einheiten Einheiten mit der folgenden mittleren Formel sind:

$$Z_c SiO_{(4-e)/2} \qquad (2)$$

wobei Z die gleiche Bedeutung wie oben hat, und c einen Wert hat, der zwischen 0 und 3 liegt.

**7.** Zusammensetzung nach einem der Ansprüche 1 bis 6,
**dadurch gekennzeichnet,**
**dass** das oder die POS (B) Siloxyl-Einheiten mit folgender Formel aufweist (aufweisen):

$$H_d L_e SiO_{(4-(d+e))/2} \qquad (3)$$

wobei :

- die Symbole L, ob identisch oder unterschiedlich, jeweils eine einwertige, nicht hydrolysierungsfähige kohlenwasserstoffhaltige Gruppe darstellen, außer bei ungünstiger Auswirkung auf die Aktivität des Katalysators, die ferner eventuell halogenhaltig ist und vorzugsweise aus den Alkylgruppen, die 1 bis 8 Kohlenstoffatome beinhalten, sowie aus den Arylgruppen ausgewählt sind,
- d gleich 1 oder 2 ist, e gleich 0, 1 oder 2 ist und d+e einen Wert hat, der zwischen 1 und 3 liegt,
- evtl. mindestens ein Anteil der anderen Einheiten Einheiten mit der folgenden mittleren Formel sind:

$$L_g SiO_{(4-g)/2} \qquad (4)$$

wobei L die gleiche Bedeutung wie oben hat, und g einen Wert hat, der zwischen 0 und 3 liegt.

**8.** Zusammensetzung nach einem der Ansprüche 1 bis 7,
**dadurch gekennzeichnet,**
**dass** die Alkenyl-Gruppen W der POS (A) und eventuell enthaltene Harze POS (H) Vinyl-Gruppierungen Vi sind, die von Siloxyl-Einheiten D, evtl. M und/oder T getragen werden.

**9.** Lackierungsverfahren,
**dadurch gekennzeichnet,**
**dass** die Zusammensetzung nach einem der Ansprüche 1 bis 8 als Antifriktionslack auf einen Träger aufgetragen wird, der eventuell mit mindestens einer Silikonelastomerschicht beschichtet ist.

**10.** Verfahren nach Anspruch 9,
**dadurch gekennzeichnet,**
**dass** es im Wesentlichen darin besteht,

- den Träger mit der Zusammensetzung nach einem der Ansprüche 1 bis 8 zu überziehen,
- die Lackschicht vernetzen zu lassen, eventuell unter thermischer Aktivierung der Vernetzung,
- und die oben genannten Arbeitsschritte eventuell mindestens einmal zu wiederholen.

**11.** Verfahren nach Anspruch 9 oder 10,
**dadurch gekennzeichnet,**
**dass** die Lackzusammensetzung auf den Träger in einem Beschichtungsgrad von weniger oder gleich 25 $g/m^2$ aufgetragen wird, vorzugsweise von 5 bis 20 $g/m^2$.

**12.** Verbund, der mit dem Verfahren nach einem der Ansprüche 9 bis 11 hergestellt werden kann,
**dadurch gekennzeichnet,**
**dass** er umfasst:

- einen Träger,
- eventuell eine mit mindestens einer der Seiten des Trägers fest verbundene und von mindestens einer Silikonelastomerschicht gebildeten Beschichtung,
- mindestens eine Lackschicht auf Basis der Zusammensetzung nach einem der Ansprüche 1 bis 8.

**13.** Verbund nach Anspruch 12,
**dadurch gekennzeichnet,**
**dass** der Träger ein biegsamer Träger ist, der vorzugsweise aus einer Gruppe ausgewählt wird, die umfasst:

- Textilien,
- nicht gewebte faserige Träger,
- Polymerfilme, insbesondere Polyester-, Polyamidfilme.

**14.** Fabrikmäßig hergestellter Artikel,
**dadurch gekennzeichnet,**
**dass** er einen Verbund nach Anspruch 12 oder 13 enthält.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0059992 A
- WO 0112895 A
- US 3220972 B
- US 3284406 B
- US 3436366 B
- US 3697473 B
- US 4340709 B
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- US 3284406 A
- US 3436366 A
- US 3697473 A
- US 4340709 A
- US 3065194 A
- US 3542901 A
- US 3779986 A
- US 4417042 A
- FR 2638752 A
- US 3678002 A
- US 3888815 A
- US 3933729 A
- US 4064096 A
- US 3142655 A
- US 3821140 A
- US 3836489 A
- US 3839266 A


### Littérature non-brevet citée dans la description


- **WALTER NOLL.** Chemistry and Technology of Silicones. Academic Press, 1968, 386-409